# EUROPÄISCHE PATENTSCHRIFT

(11) **EP 1 927 823 B1**
(45) Veröffentlichungstag und Bekanntmachung des Hinweises auf die Patenterteilung: **27.03.2013**
(21) Anmeldenummer: 07019986.4
(22) Anmeldetag: 12.10.2007
(51) Int. Cl.: G01D 5/20, G01D 11/24, G01D 5/12

(54) **Drehgeber**
Rotary encoder
Encodeur

(30) Priorität: 28.11.2006 DE 102006056462
(43) Veröffentlichungstag der Anmeldung: 04.06.2008
(73) Patentinhaber: Dr. Johannes Heidenhain GmbH, 83301 Traunreut (DE)
(72) Erfinder: Brandl, Alois, 83313 Siegsdorf (DE)

(56) Entgegenhaltungen:
- EP-A1- 0 973 014
- DE-A1- 19 904 471

## Beschreibung

Die Erfindung betrifft einen Drehgeber zur Bestimmung von Relativwinkelpositionen gemäß dem Anspruch 1.

Derartige Drehgeber werden häufig zur Bestimmung der Winkellage zweier relativ zueinander drehbaren Maschinenteile verwendet und arbeiten beispielsweise nach einem induktiven Messprinzip. Bei induktiven Drehgebern werden Erregerspulen und Empfängerspulen etwa in Form von Leiterbahnen auf einer gemeinsamen Leiterplatte aufgebracht, die beispielsweise mit einem Stator des Drehgebers fest verbunden ist. Dieser Leiterplatte gegenüber befindet sich in definiertem axialen Abstand und zentriert eine weitere Platine, die als Codescheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerspulen ein zeitlich wechselndes elektrisches Erregerfeld angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Häufig werden solche Drehgeber als Messgeräte für elektrische Antriebe, zur Bestimmung der absoluten Winkellage von entsprechenden Antriebswellen, eingesetzt.

In der EP 0 973 014 B1 der Anmelderin wird ein Aufbau für einen Drehgeber beschrieben, bei dem der axiale Abstand zwischen einer Detektoranordnung und einer Codescheibe durch ein bügelförmiges Element arretiert wird, welches eine Drehgeberwelle durch eine radiale Längsverschiebung formschlüssig klemmt. Derartige Vorrichtungen haben u. a. den Nachteil, dass sie für deren Betätigung einen vergleichsweise großen Platzbedarf in radialer Richtung beanspruchen.

Der Erfindung liegt daher die Aufgabe zu Grunde, einen Drehgeber zu schaffen, bei dem auf einfache Weise ein axialer Abstand zwischen einer Detektoranordnung und einer Codescheibe arretiert und wieder gelöst werden kann, wobei insbesondere hierfür wenig Raumbedarf beansprucht wird.

Diese Aufgabe wird erfindungsgemäß durch die Merkmale des Anspruches 1 gelöst.

Erfindungsgemäß umfasst der Drehgeber eine erste Bauteilgruppe und eine zweite Bauteilgruppe, wobei in einem Messbetrieb die beiden Bauteilgruppen relativ zueinander drehbar angeordnet sind. Die erste Bauteilgruppe weist eine Detektoranordnung, ein Gehäuseteil mit zumindest einem keilförmigen Element und einen Klemmring mit zumindest einer Nocke auf. Die zweite Bauteilgruppe umfasst eine Welle und eine Codescheibe. Die Codescheibe ist von der Detektoranordnung, die zur Codescheibe in einem axialen Abstand angeordnet ist, zur Bestimmung der relativen Winkellage der beiden Bauteilgruppen zueinander im Messbetrieb abtastbar. Das Gehäuseteil ist radial außerhalb der Welle angeordnet und umgibt insbesondere die Welle vollständig, also umschließt diese über ihren gesamten Umfang. Durch eine Drehbewegung des Klemmrings relativ zum Gehäuseteil ist über die zumindest eine Nocke eine Kraft mit einer radialen, zur Achse hin orientierten, Richtungskomponente auf das zumindest eine keilförmige Element einleitbar, so dass die Welle am Gehäuseteil außerhalb des Messbetriebs klemmbar ist. Insbesondere kann in diesem Zustand der Drehgeber, welcher insbesondere lagerlos ausgeführt sein kann, sicher transportiert werden, bevor er angebaut wird.

Der Begriff lagerlos bedeutet, dass die erste Bauteilgruppe der zweiten Bauteilgruppe lagerlos, also ohne eine Lagerung im Drehgeber gegenüber liegt.

Mit Vorteil weist der Klemmring mehrere Nocken auf, wobei dann am Gehäuseteil mehrere keilförmige Elemente angeordnet sind und die der Welle zugewandten Flächen der keilförmigen Elemente konkav gekrümmt ausgestaltet sind. In dieser Anordnung können also entlang dem Außenumfang der Welle versetzt die keilförmigen Elemente angeordnet sein, welche zur Klemmung durch die Nocken radial in Richtung der Achse bewegt werden. Somit wird eine gleichmäßige Krafteinleitung erreicht. Insbesondere kompensieren sich die durch die keilförmigen Elemente auf die Welle eingeleiteten Kräfte derart, dass diese sich zu Null addieren, so dass keine resultierende Kraft entsteht, die eine radiale Verschiebung der Achse verursachen könnte. Entsprechend ist durch diese Anordnung auch eine Zentrierung der Codescheibe relativ zur Detektoranordnung durch das Festsetzen der Klemmung möglich.

In weiterer Ausgestaltung der Erfindung ist der Klemmring mit dem Gehäuseteil lösbar verbunden. Dabei kann aber das zumindest eine keilförmige Element unlösbar mit dem Gehäuseteil verbunden sein.

Mit Vorteil kann die Welle am Gehäuseteil durch einen Reibschluss klemmbar sein, insbesondere ohne dass ein Formschluss vorliegt.

Besonders vorteilhaft ist die Anordnung, wenn der Drehgeber so konfiguriert ist, dass dieser nach einem induktiven Messprinzip arbeitet. Denn gerade bei diesem Messprinzip ist es von besonderer Bedeutung, dass der axiale Abstand zwischen der Detektoranordnung und der Codescheibe exakt justiert ist. Durch die Erfindung ist es leicht möglich diese Justierung werksseitig beim Hersteller des Drehgebers präzise vorzunehmen und den axialen Abstand zu arretieren, so dass dieser während des Transports zum Betreiber des Drehgebers nicht dejustiert wird. Erst nach erfolgtem Anbau des Drehgebers kann die Arretierung gelöst werden. Es kann bei einem Drehgeber nach einem induktiven Messprinzip die Detektoranordnung als eine Leiterplatte ausgestaltet sein, mit Erreger- und Empfängerleiterbahnen. Weiterhin kann die Codescheibe alternierend angeordnete, elektrisch leitfähige und nichtleitfähige Teilungsbereichen aufweisen.

Vorteilhafte Ausbildungen der Erfindung entnimmt man den abhängigen Ansprüchen.

Weitere Einzelheiten und Vorteile des erfindungsgemäßen Drehgebers ergeben sich aus der nachfolgenden Beschreibung eines Ausführungsbeispiels anhand der beiliegenden Figuren.

Es zeigen die
- Figur 1: eine perspektivische Schnitt-Ansicht durch einen Drehgeber gemäß dem Ausführungsbeispiel,
- Figur 2: eine Draufsicht auf den Drehgeber ohne Ringkörper,
- Figur 3: eine Detailansicht auf eine Transportsicherungsordnung,
- Figur 4: eine Teilschnittdarstellung eines Bereichs der Transportsicherungsordnung,
- Figur 5a: eine Schnittdarstellung durch den Drehgeber,
- Figur 5b: eine Draufsicht auf den Drehgeber mit Ringkörper,
- Figur 6: eine Teilschnittdarstellung des Drehgebers.

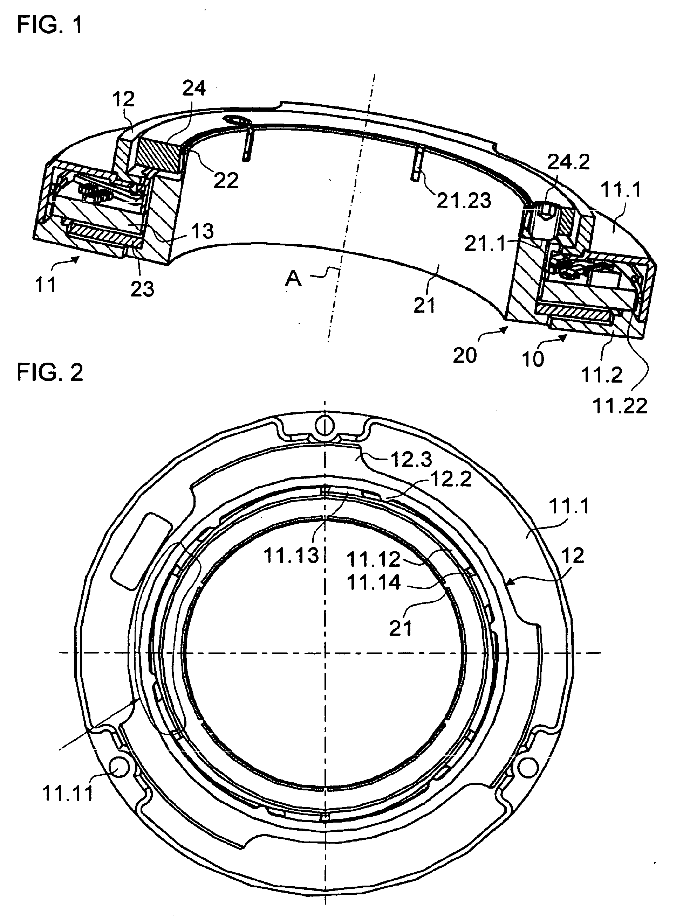

In der Figur 1 ist eine Schnittdarstellung durch einen Drehgeber gemäß einem Ausführungsbeispiel dargestellt. Der Drehgeber umfasst demnach eine erste Bauteilgruppe, hier in der Funktion eines Stators 10 und eine zweite Bauteilgruppe, hier als ein Rotor 20 wirkend. Rotor 20 und Stator 10 sind in einem Messbetrieb um eine Achse A relativ zueinander drehbar angeordnet.

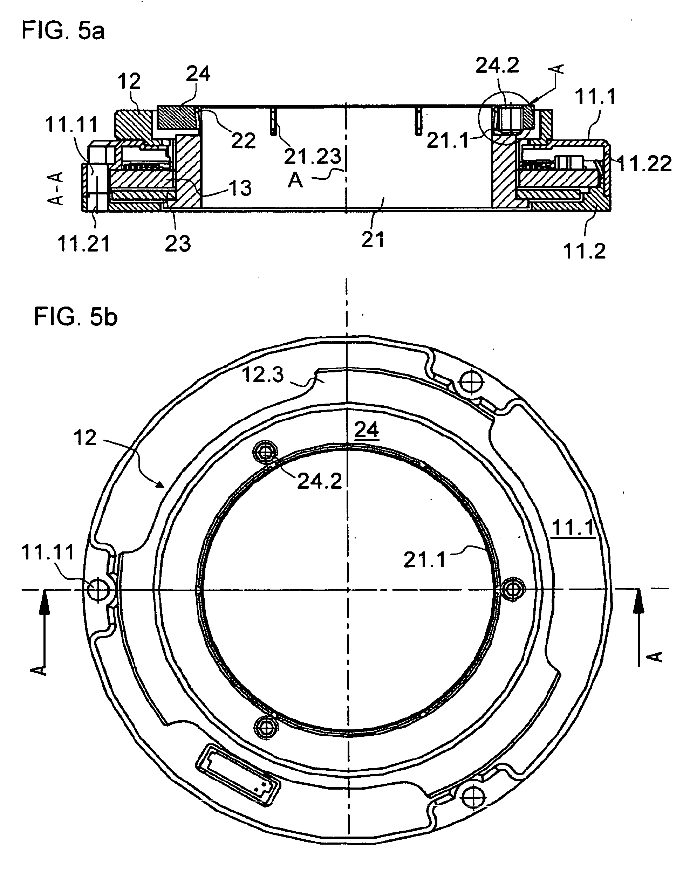

Der Stator 10 umfasst ein zweiteiliges Gehäuse 11, welches aus einem in der Figur 1 oberen ersten Gehäuseteil 11.1 und einem unteren zweiten Gehäuseteil 11.2 besteht. Mit Hilfe von Bohrungen 11.11, 11.21 (Fig. 5a) kann der Stator 10 beispielsweise an einem Gehäuse eines Motors festgelegt werden. Im vorgestellten Ausführungsbeispiel arbeitet der Drehgeber nach einem induktiven Messprinzip. Entsprechend ist am Stator 10 eine Detektoranordnung in Form einer Leiterplatte 13 angeordnet und über eine Bördelung 11.22 drehfest mit dem zweiten Gehäuseteil 11.2 verbunden.

In der DE 197 51 853 A1 ist beispielsweise das Funktionsprinzip eines induktiv arbeitenden Drehgebers erläutert. Auf der Leiterplatte 13 sind als Empfängerspulen in einer inneren Empfängerspur Empfängerleiterbahnen und in einer äußeren Empfängerspur weitere Empfängerleiterbahnen angeordnet. Darüber hinaus sind als Erregerspulen an der Leiterplatte 13 Erregerleiterbahnen vorgesehen, welche auf einer inneren, einer mittleren und einer äußeren Erregerspur aufgebracht sind. Die Leiterplatte 13 selbst weist eine zentrische Bohrung auf und ist mehrlagig ausgeführt.

Der Rotor 20 umfasst im vorgestellten Ausführungsbeispiel eine Welle, welche als Hohlwelle 21 ausgestaltet ist. In die zentrale Bohrung der Hohlwelle 21 kann beispielsweise eine Motorwelle eingeführt und festgelegt werden, um durch den Drehgeber die relative Winkellage dieser Motorwelle zum Gehäuse des Motors zu ermitteln. Die Hohlwelle 21 ist ein rotationssymmetrischer Körper und umfasst einen Absatz 21.1 und einen vergleichsweise dünnwandigen Steg 21.2. Der Steg 21.2 weist seinerseits eine Nut 21.21, eine auf die Radialrichtung bezogene konische Außenfläche 21.22, sowie Schlitze 21.23 auf.

Ferner ist am Rotor 20, insbesondere an dessen Hohlwelle 21, eine ringförmige Codescheibe 23 drehfest festgelegt. Die Codescheibe 23 besteht aus einem Substrat, welches im dargestellten Ausführungsbeispiel aus Epoxydharz hergestellt ist und auf dem zwei Teilungsspuren angeordnet sind. Die Teilungsspuren sind kreisringförmig ausgebildet und bezüglich der Achse A konzentrisch mit unterschiedlichem Durchmesser auf dem Substrat angeordnet. Die beiden Teilungsspuren bestehen jeweils aus einer periodischen Abfolge von alternierend angeordneten elektrisch leitfähigen Teilungsbereichen und nichtleitfähigen Teilungsbereichen. Als Material für die elektrisch leitfähigen Teilbereiche wurde im gezeigten Beispiel Kupfer auf das Substrat aufgebracht. In den nichtleitfähigen Teilungsbereichen wurde das Substrat dagegen nicht beschichtet. Die innere Teilungsspur besteht in der dargestellten Ausführungsform aus einem ersten halbringförmigen Teilungsbereich mit elektrisch leitfähigem Material, hier Kupfer, sowie einem zweiten halbringförmigen Teilungsbereich, in dem kein leitfähiges Material angeordnet ist. Radial benachbart zur ersten Teilungsspur liegt die zweite Teilungsspur auf dem Substrat, wobei auch die Teilungsspur aus einer Vielzahl elektrisch leitfähiger Teilungsbereiche sowie dazwischen angeordneten nichtleitfähigen Teilungsbereichen besteht. Die verschiedenen Teilungsbereiche sind materialmäßig dabei ebenso ausgebildet wie die Teilungsbereiche der ersten Teilungsspur. Insgesamt umfasst die zweite Teilungsspur im dargestellten Ausführungsbeispiel zweiunddreißig periodisch angeordnete, elektrisch leitfähige Teilungsbereiche sowie entsprechend zweiunddreißig dazwischen angeordnete nichtleitfähige Teilungsbereiche.

Die Codescheibe 23 und die Leiterplatte 13 liegen mit axialem Abstand einander gegenüber, so dass die Achse A durch die Mittelpunkte der Codescheibe 23 und der Leiterplatte 13 verläuft und bei einer Relativdrehung zwischen der Codescheibe 23 und der Leiterplatte 13 in der Leiterplatte 13 ein von der jeweiligen Winkelstellung abhängiges Signal durch Induktionseffekte erzeugbar ist. Nach diesem Messprinzip ist die Codescheibe 23 von der Leiterplatte 13 zur Bestimmung der relativen Winkellage des Rotors 20 und des Stators 10 zueinander im Messbetrieb abtastbar.

Vorraussetzung für die Bildung von entsprechenden Signalen ist, dass die Erregerleiterbahnen ein zeitlich wechselndes elektromagnetisches Erregerfeld im Bereich der Abtastspuren bzw. im Bereich der damit abgetasteten Teilungsspuren erzeugen. Im dargestellten Ausführungsbeispiel sind die Erregerleiterbahnen als mehrere planar-parallele stromdurchflossene Einzel-Leiterbahnen ausgebildet. Werden die Erregerleiterbahnen einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.

Bevor jedoch der Messbetrieb aufgenommen werden kann, muss der axiale Abstand zwischen der Codescheibe 23 und der Leiterplatte 13 möglichst genau justiert werden. Der vorgestellte Drehgeber verfügt über keine eigene Lagerung, ist also lagerlos ausgestaltet, so dass die Codescheibe 23 und Leiterplatte 13 vor der Montage an der Motorwelle und am Gehäuse des Motors zueinander axial und in geringem Umfang auch radial verschieblich sind. Andererseits sind gerade im Zusammenhang mit dem induktiven Messprinzip ein richtiger axialer Abstand und eine gute Zentrierung maßgebend für die Größe der Signalamplituden, und damit für die Güte des Messergebnisses. Aus diesem Grund wird im gezeigten Ausführungsbeispiel beim Hersteller des Drehgebers bereits eine optimale Justierung des axialen Abstands und der relativen Zentrizität zwischen der Codescheibe 23 und der Leiterplatte 13 vorgenommen und danach die Codescheibe 23 und die Leiterplatte 13 relativ zueinander arretiert, so dass auch während des Transportes zum Betreiber des Drehgebers diese Justierung nicht verloren geht. Im Zuge der Montage des Drehgebers wird zuletzt die Arretierung wieder gelöst, wobei im Messbetrieb dann ein optimierter axialer Abstand und eine optimierte Zentrierung gegeben ist.

Zum Zweck der Arretierung umfasst der Drehgeber einen Klemmring 12 aus Kunststoff mit einer Führungsfläche 12.1, Nocken 12.2, radialen Vorsprüngen 12.3 und Clipnasen 12.4. Ferner weist das erste Gehäuseteil 11.1 gebogene keilförmige Elemente 11.12 auf, die über einen Steg 11.13 mit dem Hauptkörper des ersten Teils 11.1 verbunden sind. Die gebogenen keilförmigen Elemente 11.12 weisen radial außen konvexe Oberflächen auf und radial innen konkave. Durch Schlitze 11.14 sind die gebogenen keilförmigen Elemente 11.12 in Umfangsrichtung voneinander beabstandet und radial zueinander beweglich. Das erste Gehäuseteil 11.1 mit all seinen Komponenten, insbesondere den keilförmigen Elementen 11.12, ist einstückig als ein Spritzgussteil aus Kunststoff hergestellt.

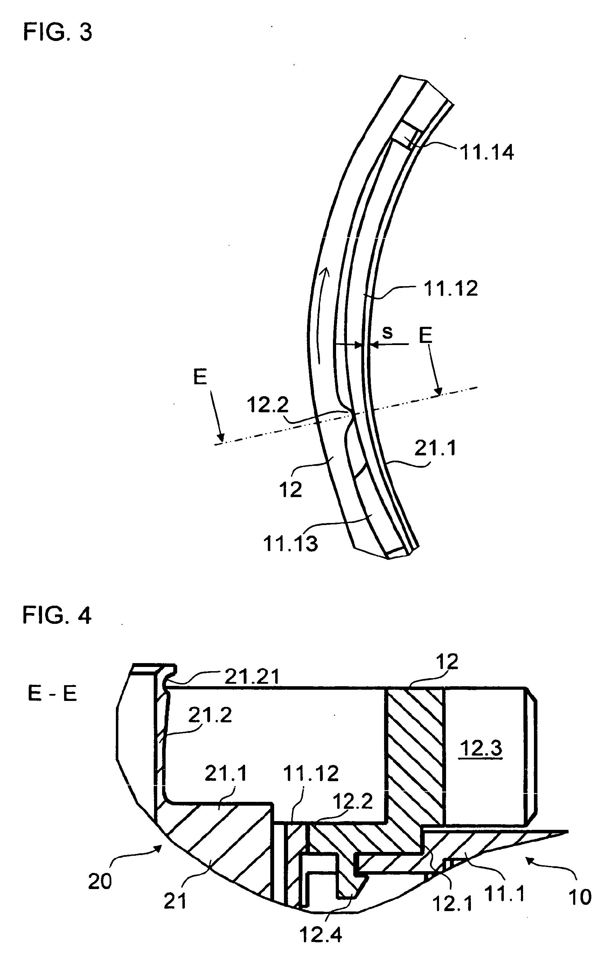

Der Klemmring 12 wird gemäß der Figur 4 beim Hersteller vor einer Justierung zunächst an das erste Gehäuseteil 11.1 mit der Clip-Verbindung lösbar verbunden und zwar in einer Stellung, in der die Nocken 12.2 die keilförmige Elemente 11.12 in ihren radial schmalen Bereichen berühren (Figur 3). Entsprechend liegt ein Luftspalt s zwischen der Hohlwelle 21 und den keilförmigen Elementen 11.12 vor, so dass der Rotor 20 relativ zum Stator 10 drehbar und in gewissen Grenzen axial verschiebbar ist. Als nächstes wird dann die Hohlwelle 21 relativ zum Gehäuse 11 axial verschoben, bis ein an den Drehgeber angeschlossenes Prüfgerät eine optimale Signalqualität meldet. Entsprechend ist dann der axiale Abstand zwischen der Codescheibe 23 und der Leiterplatte 13 optimal justiert.

In diesem Zustand wird dann der Klemmring 12 gemäß der Fig. 3 im Uhrzeigersinn relativ zum ersten Gehäuseteil 11.1 verdreht, wobei zur besseren Bedienbarkeit an den radialen Vorsprüngen 12.3 angegriffen werden kann. Diese Drehbewegung hat zur Folge, dass die Nocken 12.2 die keilförmigen Elemente 11.12 radial nach innen drücken, da diese radial nachgiebig ausgestaltet sind. Zur Erhöhung der Elastizität der keilförmigen Elemente 11.12 sind entsprechende Schlitze 11.14 vorgesehen. Auf diese Weise wird der Luftspalt s auf Null reduziert und die keilförmigen Elemente 11.12 klemmen den Stator 10 am Rotor 20, so dass eine relative axiale Verschieblichkeit unterbunden ist. Gleichzeitig erfolgt durch die allseitig symmetrische Krafteinleitung auf die Hohlwelle 21 automatisch eine Zentrierung der Codescheibe 23 relativ zur Leiterplatte 13.

Zu beachten ist in diesem Zusammenhang, dass der Bereich der Hohlwelle 21 an dem die konkaven Bereiche der keilförmigen Elemente 11.12 angreifen eine zylindrische Mantelfläche darstellt, die dort keinen Vorsprung aufweist. Entsprechend ist die Klemmung lediglich durch einen Reibschluss gegeben. Zur Erhöhung der Haltekräfte der Klemmung kann eine oder beide Oberflächen, beispielsweise die zylindrische Mantelfläche und / oder die konkaven Bereiche der keilförmigen Elemente 11.12 aufgeraut sein. Insbesondere können zu diesem Zweck eine Rändelung oder eine andere aufgeraute Oberflächenstruktur vorgesehen sein.

Die Justierung kann so stufenlos fein ausgeführt werden. Im Übrigen ist in diesem Zustand der Rotor 20 relativ zum Stator 10 nicht mehr drehbar. Der Drehgeber kann dementsprechend sicher transportiert werden, ohne dass der werksseitig festgelegte axiale Abstand dejustiert werden würde.

Im Zuge des Anbaus des Drehgebers an einen Motor wird zunächst die Motorwelle in die Hohlwelle 21 des Drehgebers eingeführt. Als nächstes wird dann das Gehäuse 11 am Gehäuse des Motors befestigt, indem Schrauben durch die Bohrungen 11.11, 11.21 gesteckt werden und in entsprechende Gewindebohrungen im Gehäuse des Motors gedreht werden.

Als nächstes wird die Hohlwelle 21 an der Motorwelle festgelegt. Zu diesem Zweck sind am Drehgeber ein Ringkörper 24 mit einer konischen Innenfläche 24.3 und ein Sprengring 22 vorgesehen, wobei der Sprengring 22 zwischen der Außenfläche 21.22 des Stegs 21.2 und der Innenfläche 24.3 des Ringkörpers 24 angeordnet ist, und hier insbesondere in der Nut 21.21 einrastet. Durch den Sprengring 22 kann mittig eine geometrische Fläche aufgespannt werden, die von der Achse A orthogonal durchstoßen wird. Diese Ebene wird im Folgenden als Querschnitt Q bezeichnet.

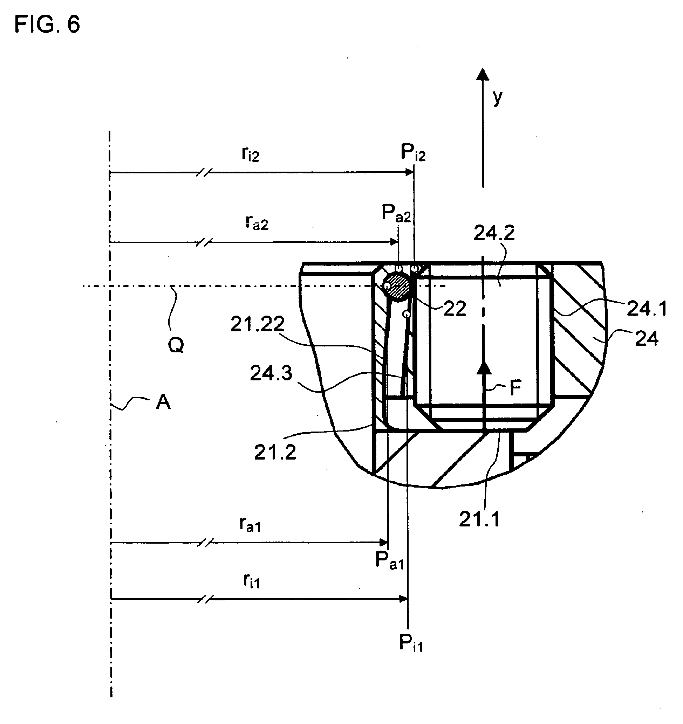

Konstruktiv ist gemäß der Figur 6 eine geometrische Anordnung geschaffen worden, bei der sowohl Punkte Pᵢ₁, Pᵢ₂ auf der Innenfläche 24.3 des Ringkörpers 24 als auch Punkte Pₐ₁, Pₐ₂ auf der Außenfläche 21.22 der Hohlwelle 21, bzw. des Stegs 21.2 definierbar sind, die unterschiedliche Abstände rᵢ₁, rᵢ₂; rₐ₁, rₐ₂ zur Achse A aufweisen. Wie bereits erwähnt, kann durch den Sprengring 22 ein ebener Querschnitt Q gelegt werden, wobei in der Ebene des Querschnitts Q der erste Punkt Pₐ₁ auf der Außenfläche 21.22 der Welle 21 zu liegen kommt, bzw. definierbar ist.

Ausgehend vom Querschnitt Q des Sprengrings 22 in einer Richtung entgegen der y-Richtung (-y, also in der Figur 6 nach unten) ist auf der Innenfläche 24.3 des Ringkörpers 24 ein virtueller geometrischer erster Punkt Pᵢ₁ und definierbar. Dagegen sind in y-Richtung (in der Figur 6 nach oben) ein zweiter Punkt Pᵢ₂ auf der Innenfläche 24.3 und zweiter Punkt Pₐ₂ auf der Außenfläche 21.22 definierbar, bzw. angeordnet. Der radiale Abstand rᵢ₁ des ersten Punkts Pᵢ₁ auf der Innenfläche 24.3 zur Achse A ist kleiner als der Abstand rᵢ₂ des zweiten Punkts Pᵢ₂ auf der Innenfläche 24.3 zur Achse A. Darüber hinaus ist auch der Abstand rₐ₁ des ersten Punkts Pₐ₁ auf der Au-ßenfläche 21.22 zur Achse A kleiner ist als der Abstand rₐ₂ des zweiten Punkts Pₐ₂ auf der Außenfläche 21.22 zur Achse A.

Im Zuge der Montage werden Gewindestifte 24.2 in Gewindebohrungen 24.1 des Ringkörpers 24 gedreht, so dass sich der Ringkörper 24 durch die Gewindestifte 24.2 auf dem Absatz 21.1 abstützt. Dadurch wird in den Ringkörper 24 eine Reaktionskraft F in eine Richtung y, welche hier parallel zur Achse A orientiert ist, eingeleitet. Der Ringkörper 24 bewegt sich in y-Richtung und drückt auf den Sprengring 22 in der Nut 21.21. Dabei wirkt eine radial nach innen gerichtete. Kraft und der Steg 21.2 wird radial nach innen gedrückt, so dass die in die Hohlwelle 21 eingeführte Motorwelle drehfest geklemmt ist. Durch diese Klemmung ist auch eine axiale Festlegung der Hohlwelle 21 an der Motorwelle gegeben. Dabei werden konstruktionsbedingt sehr hohe Klemmkräfte erreicht, weil einerseits die Nut 21.21 weit beabstandet vom Absatz 21.1, also vom Ansatz bzw. der Wurzel des Stegs 21.2, liegt und andererseits durch die konische Ausgestaltung des Stegs 21.2 dieser am Ansatz sehr dünnwandig ausgestaltet ist. Entsprechend werden hohe Biegemomente über denn Sprengring 22 eingeleitet, bei einem vergleichsweise kleinen Widerstandsmoment des Stegs 21.2. Das Widerstandsmoment des Stegs 21.2 wird zusätzlich noch durch die Schlitze 21.23 reduziert, welche in Umfangsrichtung versetzt parallel zur Achse A ausgerichtet sind.

Nachdem nun der Stator 10 am Gehäuse des Motors und der Rotor 20 an der Motorwelle festgelegt sind, kann die Arretierung, die zur Einhaltung des werkseitig justierten axialen Abstands zwischen der Codescheibe 23 und der Leiterplatte 13 vorgenommen wurde, gelöst werden. Dies geschieht dadurch, dass der Klemmring 12 entgegen dem Uhrzeigersinn relativ zum Gehäuse 11 gedreht wird. Somit werden die Nocken 12.2 in die verjüngten Bereiche der keilförmigen Elemente 11.12 gebracht und die Klemmung zwischen dem ersten Gehäuseteil 11.1 und der Hohlwelle 21 wird wieder gelöst. Der Luftspalt s ist in dieser Stellung größer als Null, und der Messbetrieb kann aufgenommen werden.

## Patentansprüche

1. Drehgeber umfassend eine erste Bauteilgruppe (10) und eine zweite Bauteilgruppe (20), wobei in einem Messbetrieb die beiden Bauteilgruppen (10, 20) relativ zueinander drehbar angeordnet sind, und
die erste Bauteilgruppe (10)
• eine Detektoranordnung (13) und
• ein Gehäuseteil (11.1) mit zumindest einem keilförmigen Element (11.12)
aufweist,
die zweite Bauteilgruppe (20)
• eine Codescheibe (23) und
• eine Welle (21),
umfasst, wobei
die Codescheibe (23) von der Detektoranordnung (13) zur Bestimmung der relativen Winkellage der beiden Bauteilgruppen (10, 20) zueinander im Messbetrieb abtastbar ist,
**dadurch gekennzeichnet, dass**
die erste Bauteilgruppe (10) einen Klemmring (12) mit zumindest einer Nocke (12.1) aufweist,
das Gehäuseteil (11.1) radial außerhalb der Welle (21) angeordnet ist und durch eine Drehbewegung des Klemmrings (12) relativ zum Gehäuseteil (11.1), über die zumindest eine Nocke (12.1) eine Kraft mit einer radialen, zur Achse (A) hin orientierten, Richtungskomponente auf das zumindest eine keilförmige Element (11.12) einleitbar ist, so dass die Welle (21) am Gehäuseteil (11.1) außerhalb des Messbetriebs klemmbar ist.

2. Drehgeber gemäß dem Anspruch 1, wobei der Klemmring (12) mehrere Nocken (12.1) aufweist und am Gehäuseteil (11.1) mehrere keilförmige Elemente (11.12) angeordnet sind und die der Welle (21) zugewandten Flächen der keilförmigen Elemente (11.12) konkav gekrümmt ausgestaltet sind.

3. Drehgeber gemäß dem Anspruch 1 oder 2, wobei die erste Bauteilgruppe (10) der zweiten Bauteilgruppe (20) lagerlos gegenüber liegt.

4. Drehgeber gemäß einem der vorhergehenden Ansprüche, wobei das zumindest eine keilförmige Element (11.12) unlösbar mit dem Gehäuseteil (11.1) verbunden ist.

5. Drehgeber gemäß einem der vorhergehenden Ansprüche, wobei die Welle (21) am Gehäuseteil (11.1) durch einen Reibschluss klemmbar ist.

6. Drehgeber gemäß einem der vorhergehenden Ansprüche, wobei der Drehgeber nach einem induktiven Messprinzip arbeitet.

7. Drehgeber gemäß dem Anspruch 6, wobei die Detektoranordnung (13) als eine Leiterplatte ausgestaltet ist mit Erreger- und Empfängerleiterbahnen.

8. Drehgeber gemäß dem Anspruch 6 oder 7, wobei die Codescheibe (23) alternierend angeordnete, elektrisch leitfähige und nichtleitfähige Teilungsbereichen aufweist.

## Claims

1. Rotary encoder comprising a first component group (10) and a second component group (20), the two component groups (10, 20) being arranged during a measuring operation such that they can be rotated relative to each other, and
the first component group (10) having
- a detector arrangement (13) and
- a housing part (11.1) with at least one wedge-shaped element (11.12),
the second component group (20) comprising
- a code disc (23) and
- a shaft (21),
it being possible for the code disc (23) to be scanned by the detector arrangement (13) to determine the respective angular position of the two component groups (10, 20) in relation to each other during measuring operation,
**characterized in that**
the first component group (10) has a clamping ring (12) with at least one cam (12.1),
the housing part (11.1) is arranged radially outside the shaft (21) and, by means of a rotational movement of the clamping ring (12) relative to the housing part (11.1), via the at least one cam (12.1), a force with a radial directional component oriented towards the axis (A) can be applied to the at least one wedge-shaped element (11.12), so that the shaft (21) can be clamped to the housing part (11.1) outside the measuring operation.

2. Rotary encoder according to Claim 1, the clamping ring (12) having a plurality of cams (12.1) and a plurality of wedge-shaped elements (11.12) being arranged on the housing part (11.1), and the surfaces of the wedge-shaped elements (11.12) that face the shaft (21) being configured to be curved concavely.

3. Rotary encoder according to Claim 1 or 2, the first component group (10) being located opposite the second component group (20) without bearings.

4. Rotary encoder according to one of the preceding claims, the at least one wedge-shaped element (11.12) being non-detachably connected to the housing part (11.1).

5. Rotary encoder according to one of the preceding claims, it being possible for the shaft (21) to be clamped to the housing part (11.1) by a frictional fit.

6. Rotary encoder according to one of the preceding claims, the rotary encoder operating in accordance with an inductive measuring principle.

7. Rotary encoder according to Claim 6, the detector arrangement (13) being configured as a printed circuit board with excitation and receiving conductor tracks.

8. Rotary encoder according to Claim 6 or 7, the code disc (23) having alternately arranged electrically conductive and non-conductive graduation regions.

## Revendications

1. Codeur rotatif comprenant un premier groupe de composants (10) et un deuxième groupe de composants (20), les deux groupes de composants (10, 20) étant disposés de façon pivotante l'un par rapport à l'autre dans un mode de fonctionnement de mesure ; et
le premier groupe de composants (10) comprenant :
- un dispositif de détection (13) ; et
- une partie de boîtier (11.1) comprenant au moins un élément en forme de clavette (11.12) ;
le deuxième groupe de composants (20) comprenant :
- un disque de codage (23) ; et
- un arbre (21) ;
le disque de codage (23) pouvant être palpé par le dispositif de détection (13) pour déterminer la position angulaire relative des deux groupes de composants (10, 20) l'un par rapport à l'autre dans le mode de fonctionnement de mesure ;
**caractérisé en ce que** :
le premier groupe de composants (10) comporte un anneau de serrage (12) pourvu d'au moins une came (12.1) ;
la partie de boîtier (11.1) est disposée dans le plan radial à l'extérieur de l'arbre (21) et une force présentant une composante de direction radiale, orientée en direction de l'axe (A) sur l'au moins un élément en forme de clavette (11.12), peut être guidée par le biais d'un mouvement de rotation de l'anneau de serrage (12) par rapport à la partie de boîtier (11.1), par le biais de l'au moins une came (12.1), de sorte que l'arbre (21) peut être serré au niveau de la partie de boîtier (11.1) en dehors du mode de fonctionnement de mesure.

2. Codeur rotatif selon la revendication 1, l'anneau de serrage (12) comportant plusieurs cames (12.1) et plusieurs éléments en forme de clavette (11.12) étant disposés au niveau de la partie de boîtier (11.1) et les surfaces orientées vers l'arbre (21) des éléments en forme de clavette (11.12) étant configurées de façon à être coudées dans le plan concave.

3. Codeur rotatif selon la revendication 1 ou 2, le premier groupe de composants (10) étant placé en vis-à-vis sans palier de roulement par rapport au deuxième groupe de composants (20).

4. Codeur rotatif selon l'une quelconque des revendications précédentes, l'au moins un élément en forme de clavette (11.12) étant relié de façon inamovible avec la partie de boîtier (11.1).

5. Codeur rotatif selon l'une quelconque des revendications précédentes, l'arbre (21) pouvant être serré au niveau de la partie de boîtier (11.1) par le biais d'un système de complémentarité de frottements.

6. Codeur rotatif selon l'une quelconque des revendications précédentes, le codeur rotatif fonctionnant selon un principe de mesure inductif.

7. Codeur rotatif selon la revendication 6, le dispositif de détection (13) prenant la forme d'une plaque conductrice avec des pistes pour élément excitant et récepteur.

8. Codeur rotatif selon la revendication 6 ou 7, le disque de codage (23) comportant des zones de séparation électriquement conductrices et non conductrices disposées en alternance.
